# EUROPEAN PATENT SPECIFICATION

(11) **EP 1 213 086 B1**
(45) Date of publication and mention of the grant of the patent: **31.08.2005**
(21) Application number: 01115295.6
(22) Date of filing: 25.06.2001
(51) Int. Cl.: B23K 11/06, B23K 11/36

(54) **Seam resistance roller welding machine**
Widerstand-Rollennahtschweissmaschine
Machine à souder à la molette de joints continus

(30) Priority: 07.12.2000 JP 2000372979
(43) Date of publication of application: 12.06.2002
(73) Proprietor: MITSUBISHI DENKI KABUSHIKI KAISHA, Tokyo 100-8310 (JP)
(72) Inventor: Adachi, Shigeru, Chiyoda-ku, Tokyo 100-8310 (JP)
(74) Representative: Popp, Eugen

(56) References cited:
- PATENT ABSTRACTS OF JAPAN vol. 017, no. 651 (M-1519), 3 December 1993 (1993-12-03) & JP 05 212549 A (MITSUBISHI ELECTRIC CORP), 24 August 1993 (1993-08-24)

## Description

### BACKGROUND OF THE INVENTION

### 1. Field of the Invention

The present invention relates to a seam welding machine, and more particularly to a seam welding machine in which respective end portions of a leading strip and a trailing strip are cut, thereafter the end portions of the two strips are slightly overlapped together, and a current is caused to flow through the end portions that are pressurized by a pair of rotary disc electrodes to perform welding utilizing resistance heat while depressing and crashing the overlapped portions.

### 2. Description of the Related Art

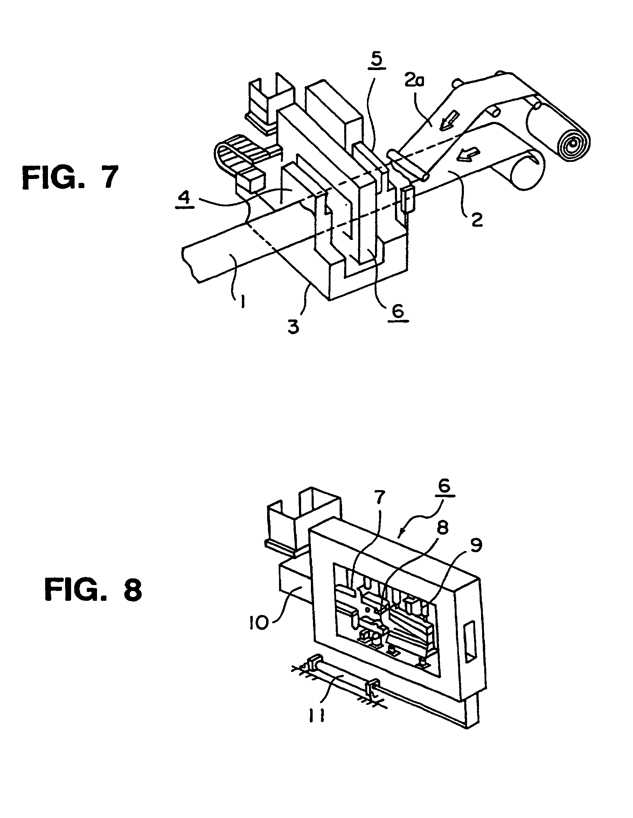

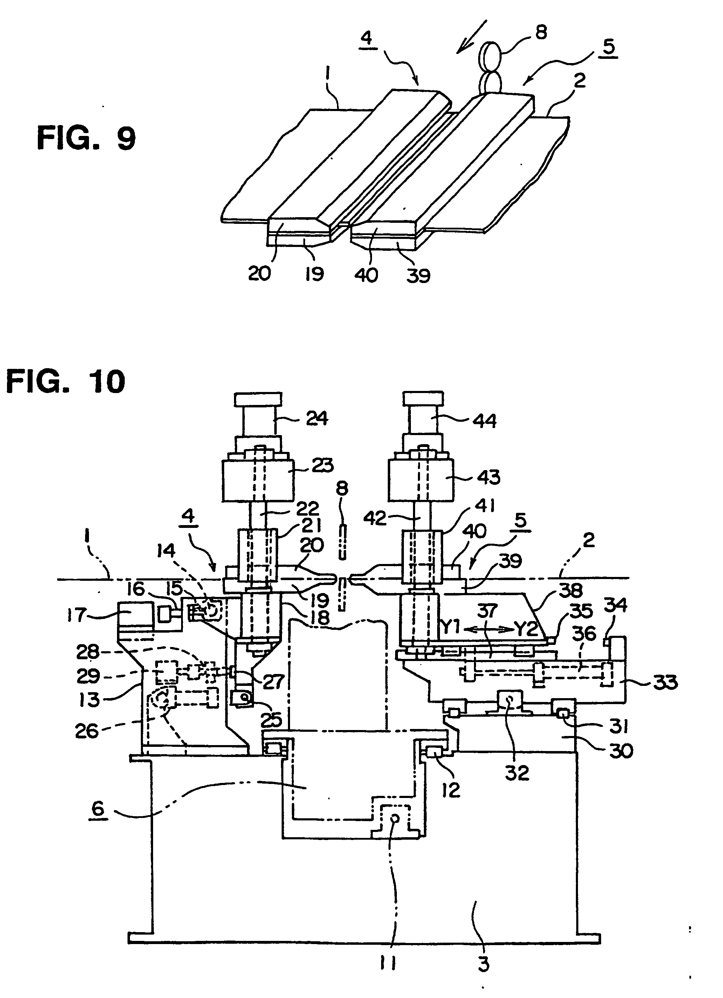

For example, Japanese Patent Application Laid-Open No. Hei 05-212549 discloses a conventional seam welding machine. The overview thereof will now be described with reference to Figs. 7 to 9. Fig. 7 is a perspective view showing an overall structure of the conventional seam welding machine. Fig. 8 is a perspective view showing a carriage of the seam welding machine shown in Fig. 7. Fig. 9 is a perspective view showing a condition immediately before the mushroom welding.

The seam welding machine is adapted to weld a leading strip 1 and a trailing strip 2 together for continuous processing in a steel process line. In Fig. 7, reference numeral 2a denotes a trailing strip. The trailing strip 2a stands by above the trailing strip 2 to shorten the time for welding. A common base 3 is provided with an outlet side clamp device 4 for fixing the trailing strip 1 onto the common base 3 and an inlet side clamp device 5 for fixing the trailing strip 2 on to the common base 3. Although not shown in detail in Figs. 7 to 9, the upper and lower clamps mounted on the outlet side clamp device 4 are slantable relative to the common base 3. Also, the inlet side clamp device 5 is adapted to be movable back and forth relative to the outlet side clamp device 4 on and along the common base 3.

A carriage 6 is disposed between the outlet side clamp device 4 and the inlet side clamp device 5. Mounted on this carriage 6 are a pair of disc electrodes 8, a double-cut type shear unit (i.e., guillotine shear) 9 for simultaneously cutting the tail end of the leading strip 1 and the leading end of the trailing strip 2, a secondary conductor 7 for connecting the disc electrodes 8 and a welding transformer 10 with each other, and the like. The pair of disc electrodes 8 are adapted to apply a pressure and a current to the overlapped portion of the leading strip 1 and the trailing strip 2 while rotating it for resistance welding. Then, the carriage 6 is moved by means of a drive unit 11 along a pair of guide rails (not shown in Figs. 7 to 9) fixed on the common base 3.

For welding the end portions of the two strips 1 and 2, as in the condition immediately before welding shown in Fig. 9, after the leading end of the trailing strip 2 and the tail end of the leading strip 1 have been cut by the guillotine shear 9, the upper and lower clamps 20 and 19 of the outlet side clamp device 4 are slanted, and furthermore, the inlet side clamp device 5 is forwarded so that the tail end portion of the leading strip 1 and the leading end portion of the trailing strip 2 are slightly overlapped with each other. Thereafter, the carriage 6 is moved pressurizing the overlapped end portions of the two strips 1 and 2 by the pair of disc electrodes 8 while pressurizing them and applying the current thereto to thereby perform welding by resistance heat.

Next, the structure and the operation of this seam welding machine will be described in greater detail with reference to Figs. 10 to 13. Figs. 10 and 11 are a front view and a side elevational view showing the structure of the seam welding machine, respectively. Fig. 12 is a plan view of a spherical bearing portion of the outlet side clamp device. Fig. 13 is a front view of the same.

As shown in Fig. 10, the outlet side clamp device 4, the inlet side clamp device 5 and the carriage 6 are mounted on the common base 3. The carriage 6 is laid on the guide rails 12 fixed between the outlet side clamp device 4 and the inlet side clamp device 5 on the common base 3 and adapted to move along the guide rails 12 by the drive unit 11.

A support base 30 is mounted on the common base 3 and a pair of guide rails 31 are fixed to the support base 30. A base 33 is laid on the guide rails 31. The base 33 is moved in a direction perpendicular to the paper surface of Fig. 10 by driving a cylinder 32. This structure is adapted to identify the position in the widthwise direction of the leading strip 1 fixed by the outlet side clamp device 4 with the position in the widthwise direction of the trailing strip 2 fixed by the inlet side clamp device 5. The structure thus described so far is a widthwise alignment mechanism of the trailing strip mounted on the inlet side clamp device 5.

Two guide rails 37 and a retracted position determining stop 34 are mounted on the base 33. A moving base 38 is laid on the base 33 to be slidable. The moving base 38 is slid, i.e., moved back and forth on the guide rails in the right and left direction (Y1-Y2 direction) by driving a moving cylinder 36. Also, the moving base 38 is stopped in a position where a retracted position determining stop 35 mounted on the moving base 38 is in abutment with the retracted position determining stop 34 mounted on the base 33 when retracting, and is stopped by a stop (not shown) also in forward motion. In the stop position upon forward motion of the base 33, the overlapped portions of both end portions of the leading strip 1 and the trailing strip 2 are welded together, and in the stop position upon retracting motion of the base 33, both end portions of the leading strip 1 and the trailing strip 2 are cut simultaneously. The feed mechanism for feeding the trailing strip 2 in the moving direction when both ends, facing each other, of the two strips 1 and 2 are to be overlapped with each other is thus constructed.

A lower clamp 39 and a lower end portion of a guide rod 42 are fixed to the moving base 38. The lower end portion of the guide rod 42 is fitted with a guide bush 41 mounted on an upper clamp 40. The upper end portion of the guide rod 42 is fixed to a beam 43. A clamp cylinder 44 is mounted on the beam 43 and the clamp cylinder 44 and the upper clamp 40 are coupled with each other by means of an operating rod (not shown). Accordingly, the clamp cylinder 44 is driven so that the upper clamp 40 is moved up and down while being guided by the guide rod 42. The drive mechanism for the upper clamp 40 in the inlet side clamp device 5 is as described above and is adapted to work when the trailing strip 2 is to be fixed or released.

The drive mechanism for the upper clamp 20 in the outlet side clamp device 4 is structured in the same manner as the drive mechanism of the upper clamp 40 in the above-described inlet side clamp device 5. That is, as shown in Fig. 10, the drive mechanism of the upper clamp 20 in the outlet side clamp device 4 is composed of a guide bush 21, a guide rod 22, a beam 23, a clamp cylinder 24 and the like. The clamp cylinder 24 and the upper clamp 20 are coupled with each other by means of an operating rod (not shown), and the clamp cylinder 24 is caused to work so that the upper clamp 20 is moved up and down while being guided by the guide rod 42.

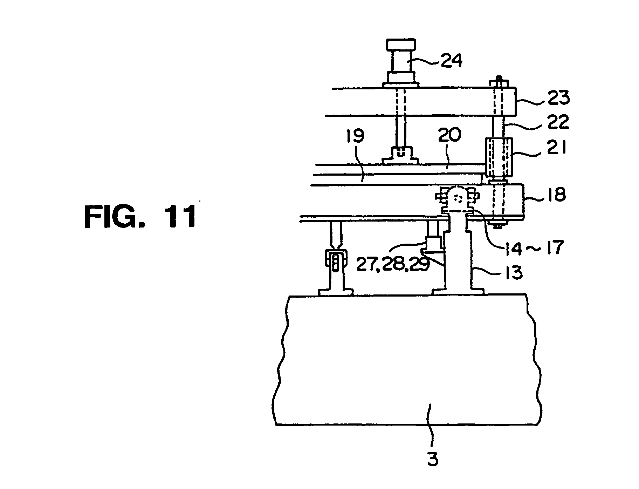

Also, as shown in Figs. 10 and 11, a support base 13 is mounted on the common base 3. Then, spherical bearings 14 supported by guide blocks 15 are arranged on the upper portion on both ends of the support base 13 in the direction perpendicular to the moving direction of the strips 1 and 2, respectively. A clamp base 18 is mounted to be rotatable relative to the support base 13 through both spherical bearings 14. Each guide block 15 is moved in a horizontal direction by drivingly rotating a screw 16 by a motor 17. Thus, the positions of both end portions of the clamp base 18 are adjusted so that the positions of both end portions in the tail end of the leading strip 1 may be adjusted. Incidentally, since a stop 27 mounted on the clamp base 18 is moved as the guide block 15 is moved, the tip end portion of a feed screw 28 that is an abutment portion for this stop 27 is adjusted by rotating the feed screw 28 by a motor 29 so that the tip end portion of the feed screw 28 is brought into contact with the stop 27. The overlap amount adjustment mechanism for both strips 1 and 2 is as described above and is provided on the outlet side clamp device 4.

Also, a lower portion of the clamp base 18 and a slanting cylinder 26 are articulated by means of a spherical bearing 25, and the slanting cylinder 26 is mounted rotatably to the common base 3. When the slanting cylinder 26 is caused to work to the right in Fig. 10, the clamp base 18 is slanted in counterclockwise in the paper surface of Fig. 10. A structure, particularly around the upper and lower clamps 20 and 19 in the outlet side clamp device 4 is lifted upwardly. Thus, the tail end portion of the leading strip 1 may be lifted so that the tail end portion of the leading strip 1 and the leading end portion of the trailing strip 2 may be overlapped with each other. Also, when the slanting cylinder 26 is returned back to the original position so that the clamp base 18 is returned to the original position, the stop 27 is brought into abutment with the tip end portion of the feed screw 28 and the outlet side clamp device 4 is returned back to a predetermined horizontal position. The elevating device for lifting the upper and lower clamps 20 and 19 of the outlet side clamp device 4 is as described above.

Note that, in the above description, the portion constituted by the spherical bearings 14, the guide blocks 15, the motor 17, the screws 16, the clamp base 18, the lower clamp 19, the upper clamp 20, the guide bush 21, the guide rod 22, the beam 23, the clamp cylinder 24, the spherical bearings 25, the slanting cylinder 26, the feed screw 28 and the motor 29 is generally called the outlet side clamp device 4. Also, the portion constituted by the support base 30, the guide rails 31, the cylinder 32, the base 33, the retracted position determining stop 34, the retracted position determining stop 35, the moving cylinder 36, the guide rails 37, the moving base 38, the lower clamp 39, the upper clamp 40, the beam 43 and the clamp cylinder 44 is generally called the input side clamp device 5.

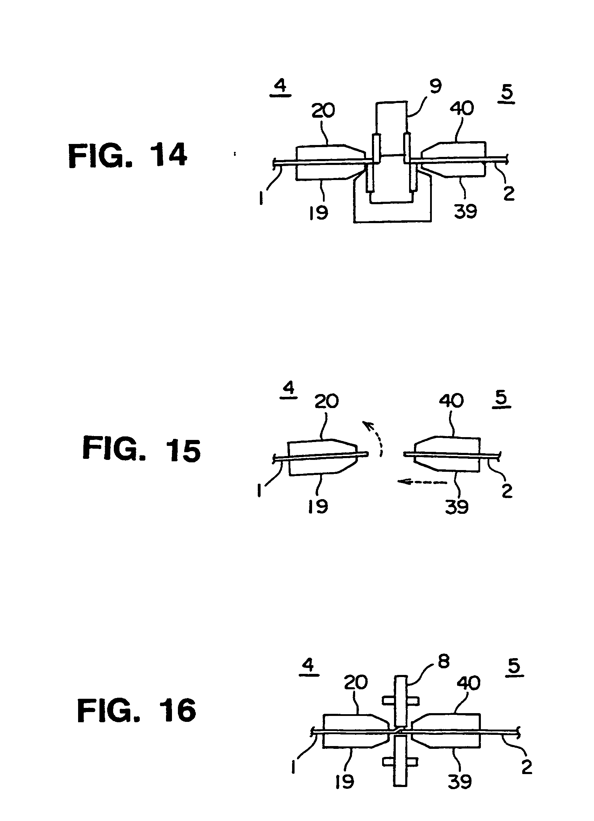

The overall concept of the operation of the above-described conventional seam welding machine will now be described with reference to Figs. 14 to 16. Fig. 14 is an explanatory view of a process for cutting the end portions of the two strips in mushroom welding. Fig. 15 is an explanatory view of a process for lifting up the tail end of the leading strip. Fig. 16 is an explanatory view of a condition where the overlapped end portions of the two strips in mushroom welding are welded.

In the steel process line, in the case where the strip being subjected to a continuous process such as acid washing, plating and heat processing, the strip travels in the direction indicated by the arrow in Fig. 7.

Then, when the leading strip 1 is fed to reach a terminal, the leading strip 1 is introduced to the blade width of the double guillotine shears 9 and stopped there. Under this condition, the tip end portion of the trailing strip 2 is fed within the blade width of the double guillotine shears 9 and stopped there. Note that, in Fig. 7, in order to shorten the time for insertion of the trailing strip 2, i.e., the line stop time, the next trailing strip 2a is on standby above the trailing strip 2.

Then, the upper clamps 20 and 40 are lowered by means of the clamp cylinders 24 and 25, and the leading strip 1 is fixed by the upper clamp 20 and the lower clamp 19 and the trailing strip 2 is fixed by the upper clamp 40 and the lower clamp 39. Under this condition, the trailing strip 2 and the leading strip 1 are simultaneously cut by means of the double guillotine shears 9 (Fig. 14).

Subsequently, the slanting cylinder 26 is caused to work to slant the clamp base 18, i.e., the upper and lower clamps 20 and 19 of the outlet side clamp device 4 to which the strip 1 is fixed. Furthermore, the inlet side clamp device 5 to which the trailing strip 2 is fixed is advanced so that the leading end portion of the trailing strip 2 is overlapped with the tail end portion of the leading strip 1. Then, the one side or both sides of the clamp base 18 are moved horizontally by rotating the screw 16 by the motor 17 so that the overlap amount of the end portions of the two strips 1 and 2 is adjusted. In this case, the adjustment is effected so that the overlap amount is increased from the weld start end to the weld terminal end (Fig. 15). Note that, as the clamp base 18 is moved, the adjustment is effected so that the tip end portion of the feed screw 28 is brought into contact with the stop 27 by drivingly rotating the screw 28 by the motor 29.

Then, the current is caused to flow to the overlapped portions of the terminal end portion of the leading strip 1 and the leading end portion of the trailing strip 2 by the welding transformer 10 through the secondary conductor 7 while pressurizing and rotating the pair of disc electrodes 8. The carriage 6 is moved by means of the drive unit 11. Thus, the tail end of the leading strip 1 and the leading end portion of the trailing strip 2 are welded together by resistance welding (Fig. 16).

Then, the fixture of the leading strip 1 and the trailing strip 2 by the outlet side clamp device 4 and the inlet side clamp device 5 is released when the welding has been completed. The welded leading and training strips 1 and 2 are passed.

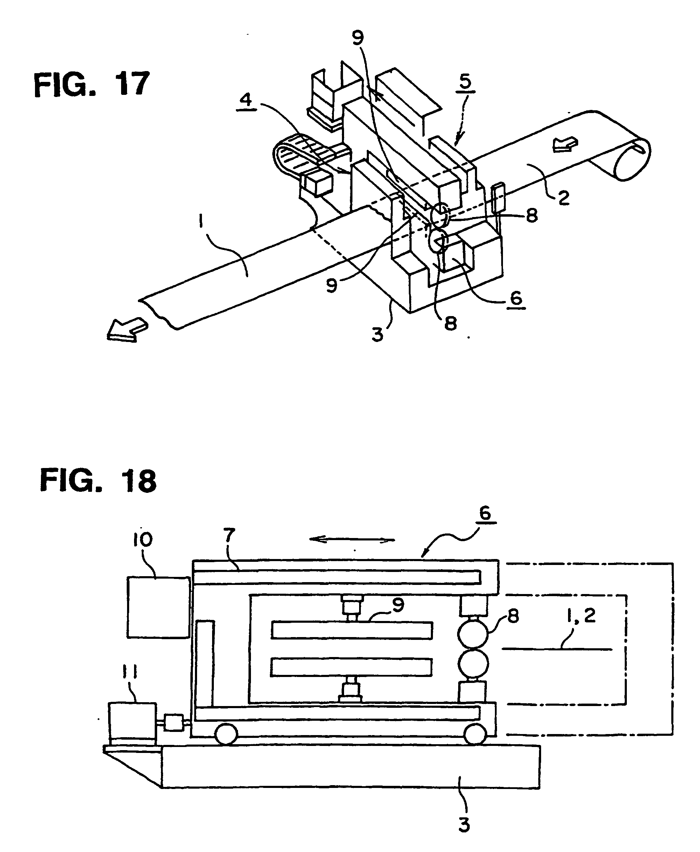

Subsequently, Figs. 17 and 18 show a concept of another conventional seam welding machine described in Japanese Patent Application Laid-Open No. Hei 10-329453. Fig. 17 is a perspective view showing the concept of the conventional seam welding machine. Fig. 18 is a side elevational view of a carriage portion of this seam welding machine. In these drawings, the components indicated by reference numerals 1 to 11 are the same as those of the above-described conventional seam welding machine.

This conventional seam welding machine is improved in the shape of the frame of the carriage 6. It is changed from the conventional gate type (rectangular shape) to a C-shaped type (U-shaped). With such a change, it is possible to reduce the dimension of the carriage 6, i.e., the overall dimension including the common base 3.

In the former type of the above-described conventional seam welding machines, the feed mechanism for moving the trailing strip 2 when the two facing end portions of the two strips 1 and 2 are to be overlapped with each other and the widthwise alignment mechanism for the trailing strip are provided in the inlet side clamp device 5 in addition to the drive mechanism for the upper clamps 20 and 40 for gripping the strip, whereas the overlap amount adjustment mechanism of the two strips 1 and 2 and an elevating unit for lifting the upper and lower clamps 20 and 19 are provided in the outlet side clamp device 4. Accordingly, since the adjustment mechanism that is needed when the two facing end portions of the two strips 1 and 2 is diffused to the two clamp devices 4 and 5, it is difficult to enhance rigidity of both clamp devices 4 and 5. Also, the pressure is applied between the end portions of the two strips 1 and 2 upon welding so that the force that tends to expand the interval between the two end portions is applied to the outlet side clamp device 4 and the inlet side clamp device 5. In this case, the two clamp devices 4 and 5 constitute a structure where it is difficult to enhance the rigidity as described above so that both of the devices are likely to be affected by the expanding force, resulting in unstability in welding quality.

In the latter type of the above-described conventional seam welding machines, the frame shape of the carriage 6 is C-shaped resulting in weak rigidity of the frame. For this reason, in the case where the pressure of the disc electrodes 8 is increased as in the case where the thickness of the strips 1 and 2 is increased, the upper disc electrode 8 escapes to the inlet side or the outlet side. Thus, the welding quality becomes unstable. Note that, in order to increase the rigidity of the frame of the carriage 6 for solving this problem, it is possible to take an approach to provide carriage traveling guide rails 12 also in the lower portion in the same manner as in the upper portion. However, in the structure of the conventional seam welding machine, the traveling guide rails have to be provided in the common base 3 so that the machine is enlarged to become very heavy.

### SUMMARY OF THE INVENTION

In order to overcome the above-described problems, an object of the present invention is to provide a seam welding machine that may ensure the seam welding with high quality without increasing the size of the machine.

In order to attain this and other objects, according to the present invention, there is provided a seam welding machine comprising: an outlet side clamp device for fixing a tail end of a leading strip; an inlet side clamp device arranged to face the outlet side clamp device at a predetermined interval for fixing a leading end of a trailing strip; a carriage adapted to be movable in a direction perpendicular to a moving direction of the leading and trailing strips between the inlet and outlet side clamp devices and provided with a shear unit for simultaneously cutting both end portions, facing each other, of the leading and trailing strips and a pair of disc electrodes for overlapping both end portions, facing each other, of the leading and trailing strips, pressurizing and applying a current while rotating along the overlapped portions, thereby welding; a common base on which mounted are the inlet side clamp device, the outlet side clamp device and the carriage; an adjustment mechanism for adjusting an overlap amount of the two end portions, facing each other, of the leading and trailing strips; an elevating mechanism for moving up and down upper and lower clamps to which one of the tail end of the leading strip and the leading end of the trailing strip when the two end portions, facing each other, of the leading and trailing strips are to be overlapped; and a feed mechanism for feeding one of the leading strip and the trailing strip in an overlap direction when the two end portions, facing each other, of the leading and trailing strips are to be overlapped, wherein the adjustment mechanism, the elevating mechanism and the feed mechanism are provided in one of the outlet side clamp device and the inlet side clamp device and the other clamp device is fixedly mounted on the common base.

With such an arrangement, the mechanical rigidity of one of the clamp devices onto which the three mechanisms are concentrated, i.e., the adjustment mechanism for adjusting the overlap amount, the elevating mechanism for moving the upper and lower clamps up and down and the feed mechanism for feeding the strips in the overlap direction is substantially the same as that of the conventional case, but the mechanical rigidity of the other clamp device may be considerably enhanced in comparison with the conventional case. Accordingly, it is generally possible to improve the quality of welding because the adverse effect of the expansion force upon welding is hardly received due to the increased mechanical rigidity of one clamp device.

Also, the adjustment mechanism includes a rotary mechanism for making it possible to rotate the clamp device relative to the common base in a horizontal direction and an angular adjustment mechanism for adjusting a fixed angle of the clamp device so that the overlap amount of the two end portions, facing each other, of the leading and trailing strips is increased from a weld start end to a weld terminal end. With such an arrangement, it is possible to readily increase the overlap amount of the trailing end portion of the leading strip and the leading end portion of the trailing strip from the weld start end to the weld terminal end.

Also, the angular adjustment mechanism includes two positioning stops for determining one of a forward and retracted positions of the two end portions in a direction perpendicular to the moving direction of the leading and trailing strips of the clamp device, and one of the two positioning stops is adapted to adjust the position thereof individually. With such an arrangement, it is possible to make the adjustment mechanism simpler.

Also, an upper portion of the carriage and an upper portion of the clamp device fixed to the common base are engaged with each other through guide rails. With such an arrangement, it is possible to enhance the mechanical rigidity of the carriage, to reduce the escape amount of the upper disc electrodes in the inlet or outlet direction, and to perform positive seam welding with high quality.

### BRIEF DESCRIPTION OF THE DRAWINGS

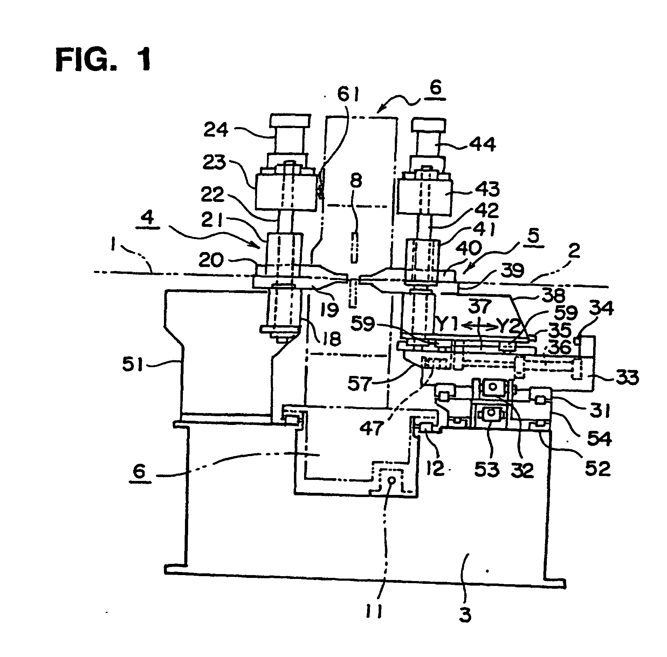

Fig. 1 is a front view of a seam welding machine according to this invention.

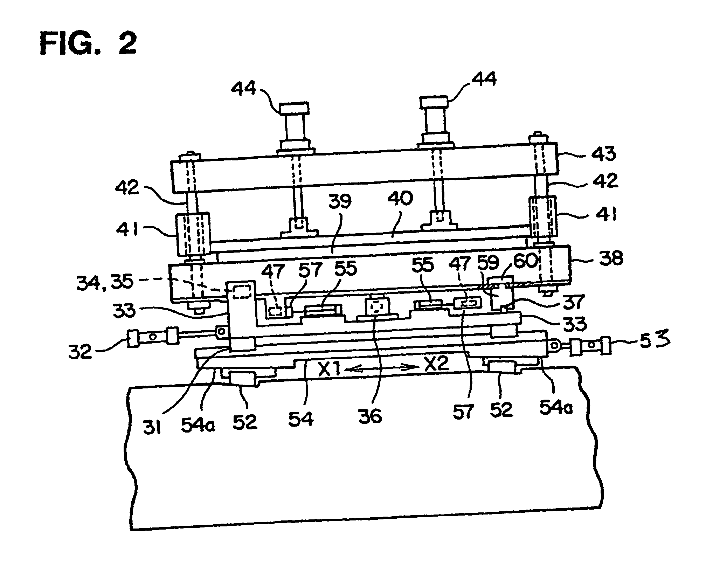

Fig. 2 is a side view of a seam welding machine according to this invention.

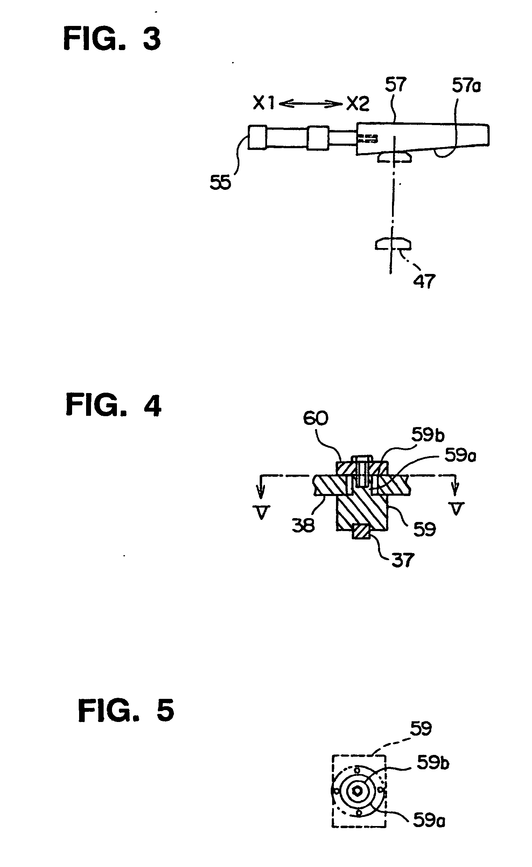

Fig. 3 is a plan view of a stop portion constituting a primary part of an angular adjustment mechanism for adjusting a fixed angle of the inlet side clamp device of a seam welding machine according to this invention.
Fig. 4 is a side elevational cross-sectional view of a rotary mechanism that makes it possible to rotate an inlet side clamp device of the inlet side clamp device of a seam welding machine according to this invention in the horizontal direction.
Fig. 5 is a cross-sectional view taken along the line V-V of Fig. 4.

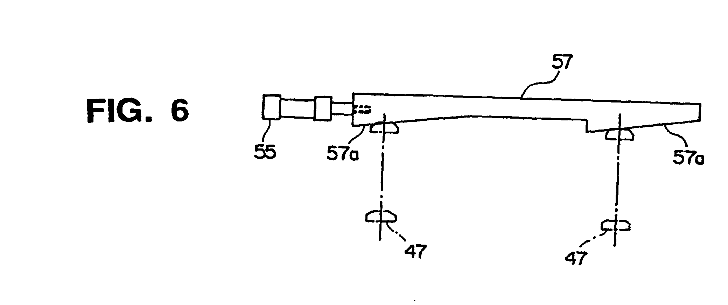

Fig. 6 is a plan view showing a modification of a stop portion constituting a primary part of an angular adjustment mechanism for adjusting a stationary angle of an inlet clamp device of a seam welding machining according to the present invention.
Fig. 7 is a perspective view showing an overall structure of a conventional seam welding machine.
Fig. 8 is a perspective view showing a carriage of a conventional seam welding machine.
Fig. 9 is a perspective view showing a condition immediately before the conventional mushroom welding.
Fig. 10 is a side view showing a structure of a conventional seam welding machine.
Fig. 11 is a front view showing a structure of the conventional seam welding machine.

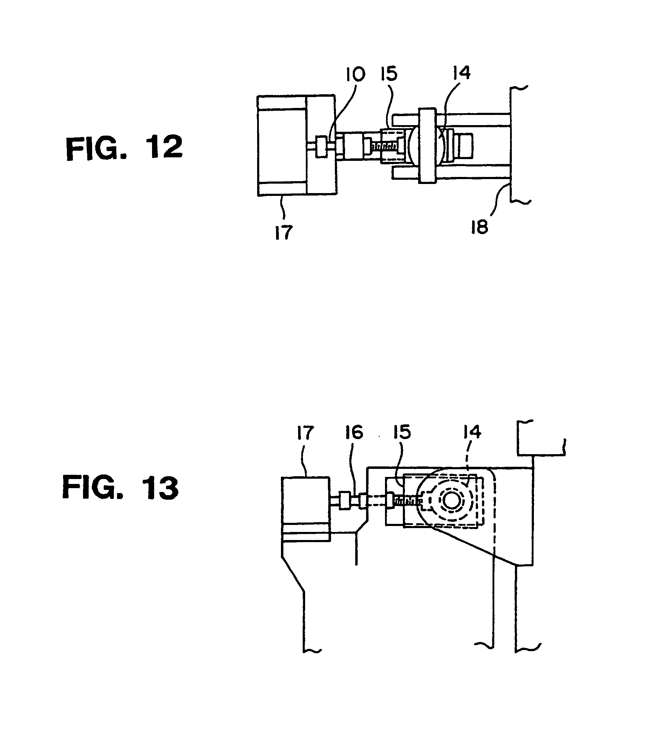

Fig. 12 is a plan view showing a spherical bearing portion of an outlet side clamp device in the conventional seam welding machine.
Fig. 13 is a front view of a spherical bearing portion of the outlet side clamp device in the conventional seam welding machine.
Fig. 14 is an explanatory view of a process for cutting the end portions of the two strips in the mushroom welding.
Fig. 15 is an explanatory view of a process for lifting up the tail end of the leading strip in the mushroom welding.
Fig. 16 is an explanatory view of a condition where the overlapped end portions of the two strips in the mushroom welding are welded.
Fig. 17 is a perspective view showing the concept of another conventional seam welding machine.
Fig. 18 is a side view of a carriage portion of another conventional seam welding machine.

### DESCRIPTION OF THE PREFERRED EMBODIMENTS

An embodiment will now be described with reference to Figs. 1 to 5. Fig. 1 is a front view of a seam welding machine according to this invention. Fig. 2 is a side view of the machine as viewed from the inlet side clamp device side. Fig. 3 is a plan view of a stop portion that constitutes a primary part of an angular adjustment mechanism for adjusting a fixed angle of the inlet side clamp device. Fig. 4 is a side cross-sectional view of a rotary mechanism that makes it possible to rotate an inlet side clamp device in the horizontal direction. Fig. 5 is a cross-sectional view taken along the line V-V of Fig. 4.

In these drawings, the components indicated by reference numerals 1 to 3, 8, 11, 12, 19 to 24 and 31 to 44 are the same as those of the above-described conventional seam welding machine and explanation thereof will now be omitted or simplified.

An outlet side clamp device 4 in this embodiment is composed of a clamp base 18, a lower clamp 19, an upper clamp 20, a guide bush 21, a guide rod 22, a beam 23 and a clamp cylinder 24. Then, a clamp base 18 is fixed to a support base 51 fixed to a common base 3. Thus, the adjustment mechanism for adjusting the overlap amount of both facing end portions of two strips 1 and 2, i.e., the elevating mechanism for moving up and down the upper and lower clamps 20 and 19 to which the tail end of the above-described leading strip is fixed when both facing end portions of the two strips 1 and 2 are overlapped with each other is not provided in the outlet side clamp device 4 as in the conventional case.

Also, carriage traveling guide rails 61 are mounted on a side surface of a carriage 6 side of the upper side of the outlet side clamp device 4 . The upper side surface of the carriage 6 is slidably engaged with the carriage traveling guide rails 61. Accordingly, when the carriage 6 moves in a direction perpendicular to the moving direction of the strips 1 and 2, the mechanical rigidity is reinforced by the guide rails 61.

An inlet side clamp device 5 will now be described. In the inlet side clamp device 5, in the same way as in the conventional case, a lower clamp 39 and a guide rod 42 are fixed to a moving base 38, the lower end portion of the guide rod 42 is fitted in a guide bush 41 mounted on a upper clamp 40, a beam 43 is fixed to the upper end portion of the guide rod 42, a clamp cylinder 44 is mounted on the beam 43, and the clamp cylinder 44 and the upper clamp 40 are coupled with each other by means of an operating rod (not shown).

However, although the moving base 38 is mounted on two guide rails 37 so as to be moved in the Y1-Y2 direction by the drive of a moving cylinder 36 in the same manner as in the conventional case, the moving base 38 is not simply moved along the guide rails 37. As shown in detail in Figs. 4 and 5, the moving base 38 is mounted through two support seats 59 arranged and distributed on the respective guide rails 37. Namely, the support seats 59 are provided at four positions so as to be distributed at four corners of the moving base 38. Also, the upper portion of each support seat 59 is constituted as a shaft portion 59a. This shaft portion 59a passes through a base plate of the moving base 38 and is fixed by fastening means such as a screw through a retainer plate 60 made of steel from above the base plate off the moving base 38 so that the moving base 38 and the support seat 59 are coupled with each other. In the three support seats 59 out of the four support seats 59, a gap 59b is provided between each shaft portion 59a and the base plate of the moving base 38. Accordingly, the moving base 38 is slidable to the guide rails 37 through the support seats 59 and rotatable in the horizontal direction about the support seat 59 having no gap. Thus, the moving base 38 is supported to be rotatable in a slight range by the four support seats 59 constituting the rotary mechanism in the horizontal direction.

In the same manner as in the conventional retracted position determining stop for the back-and-forth movement of the moving base 38 on the guide rails 37, a retracted position determined stop 35 is provided in the moving base 38. A stop 34 facing the retracted position determining stop 35 is provided on a base 33.

On the other hand, the positioning upon forward motion is different from that of the conventional case. Stationary stops 47 are provided on the moving base 38 at two positions away in a direction perpendicular to the moving direction of the strips 1 and 2 as shown in Fig. 2 (see Figs. 1 to 3). Forward positioning stops 57 provided with slant stop surfaces 57a as shown in Fig. 3 are provided corresponding to the stops 47 on the base 33 side, respectively. The forward positioning stops 57 provided with the slant stop surfaces 57a may be moved in the right and left direction in Figs. 2 and 3 by driving an overlap amount adjustment cylinder 55. Then, the forward positioning stops 57 are moved so that the position where the stationary stops 47 are in abutment is adjusted corresponding to the movement of the slant stop surfaces 57. Thus, it is possible to individually finely adjust the right and left forward positions of the moving base 38. With such an arrangement, it is possible to adjust the stationary angle in the horizontal direction of the inlet side clamp device 5 to constitute an angular adjustment mechanism for adjusting the stationary angle of the inlet side clamp device 5.

Accordingly, in this inlet side clamp device 5, the above-described rotary mechanism and the angular adjustment mechanism constitute an adjustment mechanism for adjusting the overlap amount of both facing end portions of the two strips 1 and 2 to be increased from the weld start end to the weld terminal end.

An elevating unit for the inlet side clamp device 5 will now be described. The base 33 is not provided on the fixed support base as in the conventional system but is provided on a base 54 that may be moved up and down by the elevating unit. The elevating mechanism is composed of guide rails 52 fixed to the common base 3 and having slant surfaces with top surfaces slanted in the X1-X2 direction, the base 54 provided with a slant surface 54a slidably contactable with the slant surfaces of the top surfaces of the guide rails 52 and an elevating cylinder 53 for sliding the base 54 in the X1-X2 direction. Accordingly, when the elevating cylinder 53 is driven to cause the base 54 to slide in the X1-X2 direction, the base 54 carrying the inlet side clamp device 5 is moved up and down along the slanted surfaces.

The operation will now be described. First, the upper clamps 20 and 40 are lowered by the clamp cylinders 24 and 25, a leading strip 1 is fixed by the upper clamp 20 and the lower clamp 19 and the trailing strip 2 is fixed by the upper clamp 40 and the lower clamp 39. Subsequently, the leading strip 1 and the trailing strip 2 are simultaneously cut by means of a double guillotine shears 9.

The base 54, i.e., the inlet side clamp device 5 to which the trailing strip 2 is fixed is raised over a thickness of the leading strip 1 by operating the elevating cylinder 53. Subsequently, the moving cylinder 36 is operated so that the moving base 38, i.e., the inlet side clamp device 5 to which the trailing strip 2 is fixed is forwarded so that the forward positioning stops 47 are brought into contact with the forward positioning stops 57. Subsequently, the inlet side clamp device 5 is lowered by means of the above-described elevating cylinder 53 so that the terminal end portion of the leading strip 1 and the leading end portion of the trailing strip 2 are overlapped with each other. In this case, the positional adjustment of the position of each forward positioning stop 57 is effected by means of the overlap amount adjustment cylinder 55. In the above structure, the weld start side forward amount and the weld end side forward amount of the inlet side clamp device 5 are adjusted. That is, the forward position and the stationary angle of the inlet side clamp device 5 are adjusted. As a result, the overlap amount of the both facing end portions of the leading strip 1 and the trailing strip 2 may be adjusted easily so as to be increased from the weld start end to the weld terminal end.

The carriage 6 is moved by means of a drive unit 11 under the condition that a pair of disc electrodes 8 are pressurized to the overlapped portions of the leading end portion of the trailing strip 2 with the trailing end portion of the leading strip 1 while rotating it and the current is caused to flow through a secondary conductor 7 by a welding transformer 10, whereby the overlapped portions of the leading strip 1 and the trailing strip 2 are welded together by resistance heat. In this case, since the upper portion of the carriage 6 is coupled with the top portion of the outlet side clamp device 4 by the traveling guide rails 61, the mechanical rigidity of the carriage 6 is enhanced. It is therefore possible to suppress the escape of the top disc electrodes 8 in the inlet side or the outlet side direction.

Thus, when the welding is completed, the fixture of the end portions of the two strips 1 and 2 by the inlet side clamp device 4 and the outlet side clamp device 5 is released to pass and send the welded leading and trailing strips 1 and 2 to the next processing unit.

Modifications to the above-described embodiments will now be described.
(1) The adjustment mechanism in accordance with the foregoing embodiment in which the overlap amount of the two facing end portions of the two strips 1 and 2 is adjusted to be increased from the weld start end to the weld terminal end uses the rotary mechanism in the horizontal direction of the inlet side clamp device 5 and the angular adjustment mechanism for adjusting the stationary angle of the inlet side clamp device 5. The two forward positioning stops 57 are used in the angular adjustment mechanism for adjusting the stationary angle. Of these stops 57, if the forward positioning stop 57 on the rotary center side of the moving base 38 is a stop that has no adjustment function, it is possible to ensure the sane effect.
(2) The adjustment mechanism in accordance with the foregoing embodiment in which the overlap amount of the two facing end portions of the two strips 1 and 2 is adjusted to be increased from the weld start end to the weld terminal end may be modified as follows. First, it is possible to take a mechanism in which the forward positioning stops 57 at the two positions are adjusted equally in cooperation with each other. For instance, as shown in Fig. 6, the stops are provided integrally with the slant stop surface 57a at two positions . Then, the retracted stop position of the two retracted positioning stops or one forward positioning stop having the slanted stop surface that is the same as that of the forward positioning stop adjustment mechanism shown in Fig. 3 may be adjusted. Thus, it is possible to adjust the fixture angle of the inlet side clamp device when the two strips 1 and 2 are cut. Thus, the leading end portion of the trailing strip 2 in the cut state is located with the weld completion side at the forward position in comparison with the start side and the overlap amount of the two facing end portions of the two strips 1 and 2 upon the completion of cutting end portion of the two strips 1 and 2 may be increased from the weld start end to the weld terminal end. Note that, in this case, when the two strips 1 and 2 are overlapped with each other, it is unnecessary to effect any adjustment at all. Also, in this case, it is possible to obtain the same effect as that of the above embodiment.
(3) In the foregoing embodiment, the double guillotine shears 9 are shown as the cutting unit for the two strips 1 and 2. However, the cutting unit is not limited to that but may be a rotary shear or any other suitable one.
(4) In the foregoing embodiment, the elevating mechanism for the clamp device, the adjustment mechanism for adjusting the overlap amount of the two overlapped facing portion of the two strips and the feed mechanism for feeding the strips in the overlap direction when the two facing end portions are overlapped are provided in the inlet side clamp device. Conversely, if the outlet side clamp device 4 is fixed to the common base 3, the above-described elevating mechanism, the adjustment mechanism for adjusting the overlap amount and the feed mechanism are provided in the outlet side clamp device 4 and the inlet clamp device 5 is fixed to the common base 3, it is possible to ensure the same effect.

Note that, in this case, it is necessary to mount the carriage 6 traveling guide rails 61 on the side surface of the inlet side clamp device 5 fixed to the common base 3 and to slidably engage the top side surface of the carriage 6 with the carriage 6 traveling guide rails 61.

As described above, according to a first aspect of the invention, since an adjustment mechanism for adjusting an overlap amount of the two end portions, facing each other, of the leading and trailing strips; an elevating mechanism for moving up and down upper and lower clamps to which one of the tail end of the leading strip and the leading end of the trailing strip are fixed when the two end portions, facing each other, of the leading and trailing strips are to be overlapped; and a feed mechanism for feeding one of the leading strip and the trailing strip in an overlap direction when the two end portions, facing each other, of the leading and trailing strips are to be overlapped are provided in only one of the outlet side clamp device and the inlet side clamp device and the other clamp device is fixedly mounted on the common base, it is possible to enhance the mechanical rigidity of the other clamp device and it is possible to perform a positive seam welding with high quality without enlarging the overall system.

Also, according to a second aspect of the invention, since the adjustment mechanism includes a rotary mechanism for making it possible to rotate the clamp device relative to the common base in a horizontal direction and an angular adjustment mechanism for adjusting a fixed angle of the clamp device so that the overlap amount of the two end portions, facing each other, of the leading and trailing strips is increased from a weld start end to a weld terminal end, it is possible to increase the overlap amount of the trailing end portion of the leading strip and the leading end portion of the trailing strip from the weld start end to the weld terminal end with ease.

Also, according to a third aspect of the invention, since the angular adjustment mechanism includes two positioning stops for determining one of a forward and retracted positions of the two end portions in a direction perpendicular to the moving direction of the clamp device, and one of the two positioning stops is adapted to adjust the position thereof individually, it is possible to simplify the adjustment mechanism.

Also, according to a fourth aspect of the invention, since an upper portion of the carriage and an upper portion of the clamp device fixed to the common base are engaged with each other through guide rails, it is possible to enhance the mechanical rigidity of the carriage, to reduce the escape amount of the upper disc electrodes in the inlet side or outlet side direction, and to perform positive seam welding with high quality.

## Claims

1. A seam welding machine comprising:
an outlet side clamp device for fixing a tail end of a leading strip;
an inlet side clamp device arranged to face said outlet side clamp device at a predetermined interval for fixing a leading end of a trailing strip;
a carriage adapted to be movable in a direction perpendicular to a moving direction of the leading and trailing strips between said inlet and outlet side clamp devices and provided with a shear unit for simultaneously cutting both end portions, facing each other, of the leading and trailing strips and a pair of disc electrodes for overlapping both end portions, facing each other, of the leading and trailing strips, pressurizing and applying a current while rotating along the overlapped portions, thereby welding;
a common base on which mounted are said inlet side clamp device, said outlet side clamp device and said carriage;
an adjustment mechanism for adjusting an overlap amount of the two end portions, facing each other, of said leading and trailing strips;
an elevating mechanism for moving up and down upper and lower clamps to which one of the tail end of the leading strip and the leading end of the trailing strip when the two end portions, facing each other, of the leading and trailing strips are to be overlapped; and
a feed mechanism for feeding one of the leading strip and the trailing strip in an overlap direction when the two end portions, facing each other, of the leading and trailing strips are to be overlapped, **characterized in that**
said adjustment mechanism, said elevating mechanism and said feed mechanism are provided in one of said outlet side clamp device and said inlet side clamp device and the other clamp device is fixedly mounted on said common base.

2. The seam welding machine according to claim 1, wherein said adjustment mechanism includes a rotary mechanism for making it possible to rotate said clamp device relative to said common base in a horizontal direction and an angular adjustment mechanism for adjusting a fixed angle of said clamp device so that the overlap amount of the two end portions, facing each other, of the leading and trailing strips is increased from a weld start end to a weld terminal end.

3. The seam welding machine according to claim 2, wherein said angular adjustment mechanism includes two positioning stops for determining one of a forward and retracted positions of the two end portions in a direction perpendicular to the moving direction of said clamp device, and one of said two positioning stops is adapted to adjust the position thereof individually.

4. The seam welding machine according to claim 1 or claim 2 wherein an upper portion of said carriage and an upper portion of said clamp device fixed to said common base are engaged with each other through guide rails.

## Patentansprüche

1. Nahtschweißmaschine, die folgendes aufweist:
eine auslaßseitige Einspanneinrichtung zum Festlegen eines hinteren Endes eines vorlaufenden Streifens;
eine einlaßseitige Einspanneinrichtung, die so angeordnet ist, daß sie der auslaßseitigen Einspanneinrichtung in einem vorbestimmten Abstand zugewandt ist, um ein Vorderende eines nachlaufenden Streifens festzulegen;
einen Schlitten, der so ausgebildet ist, daß er in einer Richtung senkrecht zu einer Bewegungsrichtung des vorlaufenden und des nachlaufenden Streifens zwischen der einlaß- und der auslaßseitigen Einspanneinrichtung bewegbar ist, und der versehen ist mit einer Schereinheit, um beide einander zugewandten Endbereiche des vorlaufenden und des nachlaufenden Streifens gleichzeitig zu durchtrennen, und mit einem Paar von Scheibenelektroden, um die beiden einander zugewandten Endbereiche des vorlaufenden und des nachlaufenden Streifens zu überlappen, mit Druck zu beaufschlagen und einen Strom anzulegen, während sie gleichzeitig entlang den überlappten Bereichen rotieren, wodurch geschweißt wird;
eine gemeinsame Basis, an der die einlaßseitige Einspanneinrichtung, die auslaßseitige Einspanneinrichtung und der Schlitten angebracht sind;
eine Einstelleinrichtung zum Einstellen eines Überlappungsgrads der beiden einander zugewandten Endbereiche des vorlaufenden und des nachlaufenden Streifens;
eine Hebeeinrichtung zum Auf- und Abbewegen von oberen und unteren Einspannelementen, mit denen eines von dem hinteren Ende des vorlaufenden Streifens und dem vorderen Ende des nachlaufenden Streifens festgelegt ist, wenn die beiden einander zugewandten Endbereiche des vorlaufenden und des nachlaufenden Streifens zu überlappen sind; und
eine Vorschubeinrichtung zum Vorschub von einem von dem vorlaufenden Streifen und dem nachlaufenden Streifen in einer Überlappungsrichtung, wenn die beiden einander zugewandten Endbereiche des vorlaufenden und des nachlaufenden Streifens zu überlappen sind,
**dadurch gekennzeichnet, daß**
die Einstelleinrichtung, die Hebeeinrichtung und die Vorschubeinrichtung in einer von der auslaßseitigen Einspanneinrichtung und der einlaßseitigen Einspanneinrichtung vorgesehen sind und die andere Einspanneinrichtung an der gemeinsamen Basis fest angebracht ist.

2. Nahtschweißmaschine nach Anspruch 1, wobei die Einstelleinrichtung aufweist: eine Dreheinrichtung ist, um zu ermöglichen, daß die Einspanneinrichtung relativ zu der gemeinsamen Basis in einer Horizontalrichtung gedreht wird, und eine Winkeleinstelleinrichtung, um einen festen Winkel der Einspanneinrichtung einzustellen, so daß der Überlappungsgrad der beiden einander zugewandten Endbereiche des vorlaufenden und des nachlaufenden Streifens von einem Schweißbeginnende zu einem Schweißabschlußende größer wird.

3. Nahtschweißmaschine nach Anspruch 2, wobei die Winkeleinstelleinrichtung zwei Positionieranschläge aufweist, um eine von einer vorwärtsgerichteten und einer zurückgezogenen Position der beiden Endbereiche in einer Richtung senkrecht zu der Bewegungsrichtung der Einspanneinrichtung zu bestimmen, und wobei einer von den zwei Positionieranschlägen ausgebildet ist, um die Position davon individuell einzustellen.

4. Nahtschweißmaschine nach Anspruch 1 oder Anspruch 2, wobei ein oberer Bereich des Schlittens und ein oberer Bereich der Einspanneinrichtung, die an der gemeinsamen Basis festgelegt sind, durch Führungsschienen miteinander in Eingriff sind.

## Revendications

1. Machine de soudage à la molette comprenant :
un dispositif de serrage côté sortie pour fixer une extrémité arrière d'une bande avant ;
un dispositif de serrage côté entrée agencé pour être orienté vers ledit dispositif de serrage côté sortie à un intervalle prédéterminé pour fixer une extrémité avant d'une bande arrière ;
un chariot conçu pour être déplaçable dans une direction perpendiculaire à une direction de déplacement des bandes avant et arrière entre lesdits dispositifs de serrage côté entrée et côté sortie et pourvu d'une unité de cisaillement pour couper simultanément les deux portions d'extrémité, orientées l'une vers l'autre, des bandes avant et arrière, et deux électrodes à disque pour chevaucher les deux portions d'extrémité, orientées l'une vers l'autre, des bandes avant et arrière, la mise en pression et l'application d'un courant tout en tournant le long des portions chevauchées, en soudant ainsi ;
une base commune sur laquelle sont montés ledit dispositif de serrage côté entrée, ledit dispositif de serrage côté sortie et ledit chariot ;
un mécanisme d'ajustement pour ajuster une quantité de chevauchement des deux portions d'extrémité, orientées l'une vers l'autre, desdites bandes avant et arrière ;
un mécanisme d'élévation pour déplacer vers le haut et vers le bas des organes de serrage supérieur et inférieur sur lequel l'une de l'extrémité arrière de la bande avant et de l'extrémité avant de la bande arrière, lorsque les deux portions d'extrémité, orientées l'une vers l'autre, des bandes avant et arrière doivent être amenées à se chevaucher ; et
un mécanisme d'amenée pour amener l'une de la bande avant et de la bande arrière dans une direction de chevauchement lorsque les deux portions d'extrémité, orientées l'une vers l'autre, des bandes avant et arrière doivent être amenées à se chevaucher, **caractérisée en ce que**
ledit mécanisme d'ajustement, ledit mécanisme d'élévation et ledit mécanisme d'amenée sont réalisés dans l'un parmi ledit dispositif de serrage côté sortie et ledit dispositif de serrage côté entrée, et l'autre dispositif de serrage est monté fixement sur ladite base commune.

2. Machine à souder à la molette selon la revendication 1, où ledit mécanisme d'ajustement comprend un mécanisme rotatif pour permettre la rotation dudit dispositif de serrage relativement à ladite base commune dans une direction horizontale, et un mécanisme d'ajustement angulaire pour ajuster un angle fixe dudit dispositif de serrage de sorte que la quantité de chevauchement des deux portions d'extrémité, orientées l'une vers l'autre, des bandes avant et arrière est augmentée d'une extrémité de début de soudage à une extrémité de fin de soudage.

3. Machine à souder à la molette selon la revendication 2, où ledit mécanisme d'ajustement angulaire comprend deux butées d'arrêt de positionnement pour déterminer l'une d'une position avancée et d'une position rétractée des deux portions d'extrémité dans une direction perpendiculaire à la direction de déplacement dudit dispositif de serrage, et l'une desdites deux butées de positionnement est conçue pour ajuster sa position individuellement.

4. Machine à souder à la molette selon la revendication 1 ou la revendication 2, où une portion supérieure dudit chariot et une portion supérieure dudit dispositif de serrage fixées à ladite base commune sont en prise l'une avec l'autre par des rails de guidage.
